# EUROPEAN PATENT APPLICATION

(11) **EP 2 053 008 A1**
(43) Date of publication of application: **29.04.2009**
(21) Application number: 07119199.3
(22) Date of filing: 24.10.2007
(51) Int. Cl.: B66C 13/12, H02G 1/06

(54) **System for dispensing and retrieving a length of cable into/from a cable channel**

(71) Applicant: IPALCO B.V., 2952 BD Alblasserdam (NL)
(72) Inventor: BRANDEL, Peter p/a Cavotec (Swiss) SA, CH-6900 LUGANO (CH)
(74) Representative: Ocvirk, Philippe

(57) **Abstract**

A system for dispensing and retrieving a length of cable into/from a cable channel comprising:
storage means (22) adapted for dispensing and retrieving the cable (20);
a cable guide (26) for guiding cable (20) being dispensed into the cable channel (24);
sensing means (38_{1,2}) adapted to detect the position of the cable guide (26) with respect to the cable channel (24);
a mobile support (32) on which the cable guide (26) is mounted ; and
a controller (30) configured to receive position information from the sensing means and to control the position of the cable guide (26) taking into account the position information.

## Description

### TECHNICAL FIELD

The present invention generally relates to the field of cable dispensing systems, and more specifically to the use of such systems in vehicles such as electric gantry cranes where the power cable is stored on a reel and is released into a cable channel in the work surface of the crane and parallel to its normal working runway.

### BACKGROUND ART

Gantry cranes are used *inter alia* for handling cargo containers in dockyards and container terminals. Typically these cranes include an elevated horizontal gantry beam supported above the ground on legs, forming an inverted U-shaped frame. The gantry crane is moveable longitudinally on fixed rails, tracks or guidable wheels. The hoisting operation is accomplished by a winch or similar device, which raises and lowers cables attached to a lifting frame or hook from which the load is suspended. Generally the cable (e.g. steel wire cable) and winch are mounted on one or more trolley(s), which run transversely along the horizontal gantry beam. This arrangement permits the load to be moved vertically by the hoisting apparatus, transversely by the trolley and longitudinally by moving the entire gantry structure along the ground on its rails or wheels.

Today, electric gantry cranes are preferred to diesel-powered cranes essentially due to environmental issues and high oil price. There are typically two ways of supplying electricity to an electric gantry crane: either via a bus bar extending along its runway or by means of a cable connected to a ground power supply and that can be dispensed from (and retrieved by) a reel on the gantry crane.

In the case of a gantry crane equipped with a power cable stored on a reel, it is desirable to protect the cable from traffic. Therefore, it is known to provide channels (also referred to as trench or duct) dimensioned to receive the cable. The principle is that, as the gantry crane moves forward along its runway, the reel unwinds the cable, which is laid in the channel. For additional protection, both for the cable and for vehicles/pedestrians, and to avoid channel obstruction due to debris and the like, the cable channel can be protected by a flexible cover belt such as e.g. described in US 5,556,680.

A difficulty when using such cable channel is that the tolerance for guiding the cable into the channel protected by the flexible cover is reduced.

In the case of a cable powered gantry crane on rails, the channel is generally provided parallel to the tracks and the cable reel system is fixed to the frame structure of the gantry crane so that the output of the cable guide of the reel system is aligned with the channel in the quay surface, whereby paid out cable is necessarily released (laid) in the channel.

However guiding the cable into the channel in the case of a rubber tired gantry crane is more difficult since the gantry crane is freely moveable on its wheels, and may deviate from alignment with the cable channel.

### OBJECT OF THE INVENTION

The object of the present invention is to provide an improved system for dispensing and retrieving a length of cable that can be used in electric gantry cranes or other vehicles, where a cable is to be laid in a channel as the vehicle is moving.

This object is achieved by a system as claimed in claim 1.

### GENERAL DESCRIPTION OF THE INVENTION

According to the present invention, a system for dispensing and retrieving a length of cable into/from a cable channel comprises storage means adapted for dispensing and retrieving the cable; and a cable guide for guiding cable being dispensed generally toward the channel.

According to an important aspect of the invention, sensing means are provided to detect the position of the cable guide with respect to the cable channel; and the cable guide is mounted onto a mobile support. A controller is configured to receive position information from the sensing means and to control the position of the cable guide taking into account the position information.

As it will be understood, this system is particularly well suited for paying out and retrieving a power cable of an electric gantry crane. As the gantry crane moves away from the power plug (or connector or unit) to which the free end of the power cable is connected, cable is released and guided by the cable guide to fall into the cable channel provided in the quay surface (or other working area of the gantry crane) for its protection. The cable dispensing and retrieving system of the invention is capable of sensing and monitoring the position of the cable channel to detect whether the cable guide is properly positioned with respect to the channel, and to correct the position of the cable guide in case of misalignment in order to bring it back in alignment with the channel.

Hence, if the electric gantry crane equipped with the system deviates on its runway to the extent that with a conventional cable reel system the dispensed cable would be laid outside of the channel, the system in accordance with the present invention is able to compensate for the vehicle deviation by moving the cable guide so that it remains in alignment with the channel axis.

Preferably the sensing means comprise a pair of distance sensors, e.g. laser sensors. In one embodiment, a pair of distance sensors are arranged laterally to the cable guide and adapted to measure the distance from the cable guide to a respective edge of the channel.

The controller may be configured to compare distance information received from both distance sensors, and to generate a misalignment signal in case the difference between the distances measured by each sensor exceeds a predetermined threshold; and to control the mobile support to move the cable guide until the misalignment signal is cancelled.

A variety of sensor types and technologies can however be used (mechanical, inductive, capacitive). Also, instead of measuring the distance to the channel edges, it is possible to provide marks or markers in the channel, next to the channel or even in the cover belt, that cooperate with appropriate sensors to detect the channel position. For example, inductive sensors can be used to detect signal wiring embedded in the ground, in the channel or in the cover belt. Alternatively, optical sensing can be implemented by means of a digital camera and software capable of detecting position lines painted on the ground and/or, for example, obstacles impeding the passage of the crane.

Similarly, limit switches can be provided on the mobile support to detect intermediate or end-positions of the cable guide, the controller being designed to receive signals from these limit switches and generate corresponding alert or stop signals.

Further, the cable guide, sensors, switches and technologies described above may be advantageously employed for purposes of operating electric cranes, particularly rubber tired gantry cranes, automatically or remotely with a high degree of safety.

It may be noted that the mobile support for the cable guide may be a fixed structure on which the cable guide is movably guided, or a moving structure to which the cable guide is fixed, or a combination of both.

In one embodiment, the mobile support comprise a support bar onto which a carriage is slideably mounted and the cable guide is fixedly mounted to the carriage. Driving means are provided for moving the carriage along the slide bar. Whereas a linear motor is well suited for such configuration, any type of drive means allowing a linear translation movement can be used.

Conventionally, the storage means may comprise a reel with a motor operably connected to the reel for dispensing (unwinding) and retrieving (winding) cable. The support bar may extend substantially parallel to the reel axis. In practice, the cable will unwind from the reel due to the traction on the cable as the crane moves forward, i.e. motor operation is not necessarily required for cable unwinding. Conversely, the motor will typically be operated for rotating the reel in the winding direction to retrieve the cable.

In case the cable channel is locally or integrally protected with a flexible cover belt, the system is advantageously equipped with deflection means for such cover belt, e.g. mounted to the cable guide.

The present system for dispensing and retrieving a length of cable into/from a cable channel can be used in a variety of situations where a cable is to be dispensed in an accurate manner from a moving vehicle into a channel (not necessarily in the ground) and where the vehicle is likely to deviate from a course running parallel to the channel.

Accordingly, the present invention also concerns a vehicle, namely an electric rubber tired gantry crane comprising the present system for dispensing and retrieving a length of cable mounted thereon.

According to another aspect of the invention, a method of operating a cable dispensing and retrieving system in a vehicle is proposed, wherein a cable dispensed from storage means is released via a cable guide into a cable channel. It is to be appreciated that the position of the cable guide with respect to the cable channel is monitored, and in case a misalignment is detected the cable guide is moved over an appropriate distance to be brought back in alignment with the cable channel.

In one embodiment, a pair of sensors is arranged at the same level with respect to the channel top edges and the sensors are each used to detect the distance to a respective channel edge. A misalignment signal is generated in case the difference between the distance measured by the first sensor and the distance measured by the second sensor exceeds a predetermined threshold. The use of a predetermined threshold is of course preferable in case the two channel edges to be monitored are not at the same level. Advantageously, the misalignment signal is generated in case the predetermined threshold is exceeded during a predetermined time period and/or over a predetermined displacement length of the vehicle. This avoids generating a misalignment signal due to artefacts or local differences in ground level between edges.

In case the above pair of sensors is used to detect a misalignment, and in case a misalignment signal is generated, the cable guide is moved in the direction of the sensor indicating the greatest distance.

For improved safety, alert or stop signals can be generated, which can be used to trigger visual and/or audio alarms for an operator, or used in the vehicle control unit to e.g. immobilise the vehicle. For example, in case the channel guide has been moved over a first predetermined distance with respect to an initial position, an alert signal may be generated. In case it is determined that the channel guide has been moved over a second predetermined distance with respect to the initial position, greater than the first predetermined distance, a stop signal is generated. The alert signal may accordingly be used to trigger an alarm on the dashboard and the stop signal as an input signal in the main control unit of the vehicle to stop its movement.

Overall, the sensing means and/or additional sensors that detect the cable guide movements, can generate signals that may be used for the crane auto-steering.

According to a further aspect of the present invention, there is proposed a method of operating a vehicle equipped with a system for dispensing and retrieving a length of cable into/from a cable channel, wherein the system is operated according to the above method, and wherein the system generates signals indicative of the position of the cable guide and/or of the vehicle's passageway, that are used for operating the vehicle.

### BRIEF DESCRIPTION OF THE DRAWINGS

The present invention will now be described, by way of example, with reference to the accompanying drawings, in which:
FIG. 1: is a schematic side view of an electric rubber tired gantry crane equipped with the present cable dispensing and retrieving system;
FIG. 2: is a view of the right-hand leg of the gantry crane in Fig.1, seen from the side;
FIG. 3: is an enlarged view of detail A in Fig.2;
FIG. 4: is a view of detail A with the cable guide moved from the position in Fig.3 to the left over distance D; and
FIG. 5: is a view of detail A with the cable guide moved from the position in Fig.3 to the right over distance D.

### DETAILED DESCRIPTION OF A PREFERRED EMBODIMENT

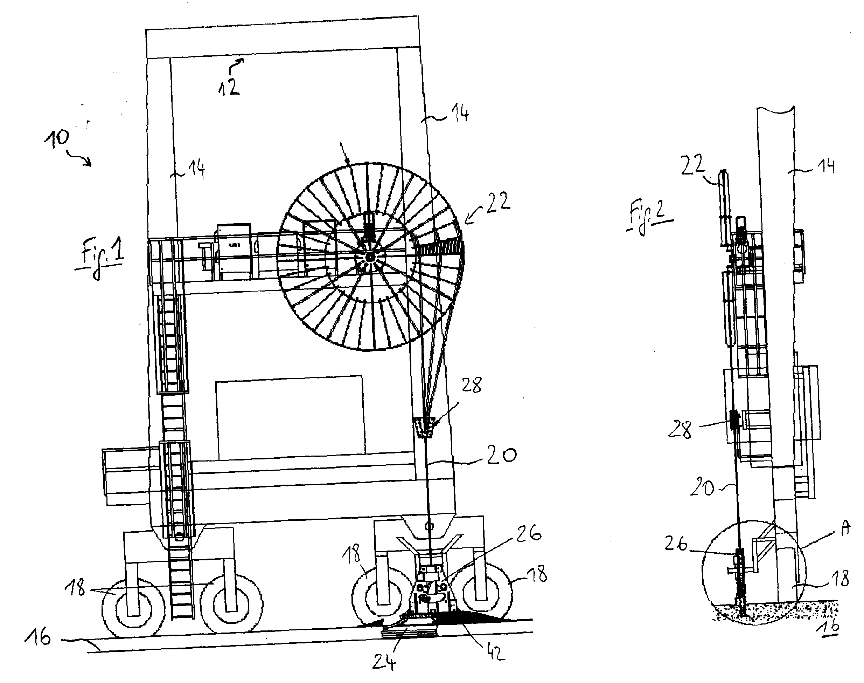

Fig.1 schematically shows an electric rubber tired gantry crane 10, which may be used for handling cargo containers in dockyards. As it is known in the art, the gantry crane 10 comprises an overhead gantry beam structure generally indicated 12 supported on each side by a pair of legs 14 (only the left-side pair of legs is shown in Fig.1). The hoisting operation is accomplished by a winch or similar device, which raises and lowers cables attached to a lifting frame or hook from which the load is suspended. Generally the cable (steel wire cable) and winch are mounted on a trolley, which runs transversely along the horizontal gantry beam (hoisting equipment and trolley are not shown in the Figs).

The gantry crane 10 is moveable on the ground, here e.g. on a quay 16, by means of rubber tired wheels 18 provided at the end of each leg 14, some of the wheels 18 being coupled to a motor (not shown). The present gantry crane 10 is designed to be electrically operated, so that the hoisting equipment and wheels 18 are driven by electric motors and equipment (not shown). The electric power is supplied to the gantry crane 10 by means of a power cable 20 that is stored on a cable reel 22, which forms part of the crane's cable dispensing and retrieving system. The reel 22 is operatively coupled to drive means (including an electric motor - not shown) for rotating the reel 22 in an appropriate direction to dispense (unreel) and/or retrieve (reel in) a length of cable 20. The free end of the power cable 20 is e.g. plugged in a ground socket (not shown) installed on the quay. In order to protect the cable 20 from quay traffic, the cable 20 is laid in a cable channel 24 (also called duct or trench) provided in the quay surface or another area of the docks. The cable is typically dispensed (paid out) in the channel 24 by means of a cable guide 26 that guides the cable 20 downwardly towards the channel 24. In the present embodiment the cable guide 26 is arranged close to the ground and an intermediate cable guide 28 is provided half way between the reel 22 and cable guide 26 to control the cable direction (varies with apparent diameter of cable on reel).

As it is known in the art, the gantry crane runway generally extends along the quayside where ships are docked for cargo loading/unloading. The cable channel 24 typically extends parallel to the lengthwise direction of the runway. As it will be understood, for the cable 20 to be properly dispensed/released into the cable channel 24, the cable guide 26 must be aligned with the channel 24, i.e. the cable guide 26 must guide the cable essentially at the vertical of the channel 24.

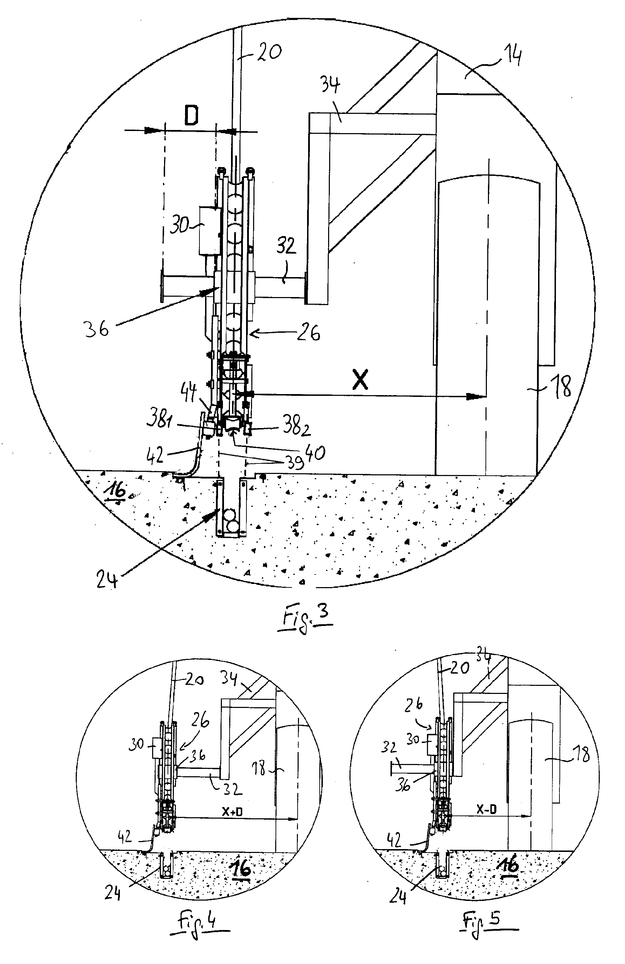

In order to ensure proper guidance of the cable 20 into the channel 24, the cable guide 26 is mounted on a mobile support with associated drive means; and sensing means are provided to detect the position of the cable guide 26 with respect to the cable channel 24. A controller, indicated 30 in Fig.3, is configured to receive position information from the sensing means and to control the position of the cable guide taking into account that position information.

In the present embodiment, the mobile support comprises a horizontal support bar 32 mounted to a frame structure 34 fixed to the right-hand leg 14 (in Fig.1) of the gantry crane 10. The cable guide 26 is fixed onto a carriage 36, which is itself slideably mounted onto the support bar 32. Drive means (not shown) such as e.g. a linear motor can be used to operate the translation of the carriage 36, and thus of the cable guide 26, on the support bar 32. For example, the fixed part (*rotor*) of the linear motor may be arranged along the support bar 32 whereas the mobile part (*stator*) is affixed to the carriage 36. However any drive means capable of translating the carriage on the support bar could be used.

As for the sensing means, various types of sensors can be used. In the present embodiment, a pair of distance sensors, preferably laser sensors 38₁ and 38₂, are used to monitor the position of the cable guide 26 with respect to the cable channel 24. As better seen in Fig.3, the laser sensors 38₁ and 38₂ are installed on the cable guide 26, on both sides of the cable release point 40. Preferably, the cable release point 40 and the two laser sensors 38₁ and 38₂ are arranged in a line that is substantially perpendicular to the direction of cable channel 24. The two laser sensors 38₁ and 38₂ are oriented so that each measures the distance to a respective outer edge of the cable channel (their laser beams are indicated by dashed lines 39 in Fig.3).

Controller 30 is configured to receive the measuring signals from the sensors 38₁ and 38₂, indicative of the distance information, and operates the drive means (linear motor) to update the cable guide 26 position, if necessary.

A preferred mode of operation of the controller 30 is as follows. In Fig.3, the gantry crane 10 is parallel to the cable channel 24, which is located at distance X (Fig.3) from the median plane of wheel 18. The cable guide 26 is here also at distance X from the wheel 18, so that it is aligned with the cable channel 24. For the gantry crane 10 to move forward along its runway, away from the ground plug, cable 20 must be unreeled and laid in the channel 24. In the ideal situation, the crane operator is able to drive the gantry crane 10 along the runway while maintaining distance X from the cable channel 24, so that the cable guide 26 remains aligned with the cable channel 24 as in the position illustrated in Fig.3. However, in practice deviations occur, and this is where the present system proves particularly efficient.

As the gantry crane 10 moves forward and cable 20 is unreeled, the distance from each sensor 38_{1,2} to the respective channel edge is monitored. Suppose the gantry crane 10, from the position shown in Fig.3, diverts to the left. The left-hand sensor 38₁ will measure essentially the same distance as previously but the right-hand sensor 38₂ will measure a greater depth, since its beam will fall inside the channel 24. This difference in distance is interpreted in the controller 30 as a misalignment of the cable guide 26, for which corrective measures are to be taken. The controller 30 will thus operate the linear motor to move the carriage 36, and thus the cable guide 26, in direction of the sensor 38₂ indicating the greatest depth, until the same distance is again indicated by both sensors 38_{1,2}. Similarly, if the GC 10 diverts to the right from the position of Fig.3, the first sensor 38₁ will measure a greater distance than sensor 38₂, and the controller 30 will compensate this deviation of the gantry crane 10 by moving the cable guide 26 to the left, until same distance is again measured by both sensors 38.

The capability of compensating for a deviation of the gantry crane 10 depends of course on the construction of the mobile support for the cable guide 26. In the present embodiment, as apparent from Fig.3, the cable guide 26 may be translated to the left or to the right by a distance D, which is the distance from the left, respectively right, side of the cable guide 26 to the left, respectively right, endpoint of the support bar 32. The position of the cable guide 26 in these extreme positions is shown in Figs 4 and 5.

For cable, pedestrian and vehicle protection and to avoid channel obstruction due to debris and the like falling therein, the cable channel 24 can be protected by a flexible cover belt, indicated 42 in the Figs, such as e.g. described in US 5,556,680. Accordingly, the GC 10 is preferably equipped with a deflecting device 44 that is adapted to open the cover belt 42 locally by twisting, as is known in the art. The local opening of the cover belt 42 in the area of the deflecting device 44 provides unrestricted access to the channel 24 in this area, whereas the remainder of the channel 24 remains protected by the cover belt 42. It may be noted that when the cover belt 42 is open as in Fig.3, it is sufficiently removed so that both outer edges of channel 24 are uncovered and thus allows distance measurement by means of the sensors 38.

In the above-described embodiment, the controller 30 determines a misalignment when one of the sensors 38ᵢ measures a distance greater than the other. In practice, the controller 30 may preferably conclude to a misalignment in case the difference in distance measured by the sensors 38 is greater than a predetermined threshold. Another parameter that may be taken into account to conclude to a misalignment is whether the discrepancy in distance information between both sensors persists over time and/or crane movement. This avoids concluding to a misalignment in case of, e.g., artifact or local defect in the quay surface.

Preferably, the controller 30 is designed to generate an alert signal when the compensation distance reaches or exceeds a predetermined value, e.g. if the cable guide 26 has been moved over 200 mm to the left while the maximum compensation is 250 mm (indicated D in Fig.3). The alert signal can be relayed to the operator dashboard to emit an alert indicating the operator to correct the gantry crane movement. Such displacement of the cable guide, respectively of the carriage, can be easily detected on the support bar by a limit switch.

The extreme positions of the cable guide 26, respectively carriage 32, on the support bar 32 as shown in Figs. 4 and 5 are also preferably detected by limit switches, to generate a stop signal in the controller 30 that can be forwarded to the main operating unit of the gantry crane 10 in order to stop the driving motor and immobilize the gantry crane 10.

Whereas the present gantry crane 10 is designed to be fully operable with electricity, it may additionally comprise an auxiliary diesel engine for moving the crane from one quay to another or anywhere else on the port where electric supply is not foreseen. A small diesel engine is sufficient for such operation, since much less power is required as compared to a diesel operated gantry crane.

It remains to be noted that in practice, the cable will unwind from the reel under the traction force exerted on the cable as the crane moves forward, the free end of the cable being plugged or connected on the quay. This means that motor operation is not necessarily required for cable unwinding. Conversely, the motor will typically be operated for rotating the reel in the winding direction to retrieve the cable from the channel.

## Claims

1. A system for dispensing and retrieving a length of cable into/from a cable channel comprising:
storage means adapted for dispensing and retrieving the cable;
a cable guide for guiding cable being dispensed into the cable channel;
**characterized by**
sensing means adapted to detect the position of the cable guide with respect to the cable channel;
a mobile support on which the cable guide is mounted ; and
a controller configured to receive position information from the sensing means and to control the position of the cable guide taking into account said position information.

2. System according to claim 1, wherein the sensing means comprise distance sensors.

3. System according to claim 2, comprising a pair of distance sensors arranged laterally to the cable guide and adapted to measure the distance from the cable guide to a respective edge of the channel.

4. System according to claim 3, wherein the controller is configured:
to compare distance information received from both sensors, and to generate a misalignment signal in case the difference between the distances measured by each sensor exceeds a predetermined threshold; and
to control the mobile support to move the cable guide until the misalignment signal is cancelled.

5. System according to any one of the preceding claims, comprising limit switches on the mobile support to detect intermediate or end-positions of the cable guide, the controller being designed to receive signals from these limit switches and generate corresponding alert or stop signals.

6. System according to any one of the preceding claims, wherein the mobile support comprise a support bar onto which a carriage is slideably mounted, the cable guide being fixedly mounted to the carriage; and driving means for moving the carriage along the slide bar.

7. System according to claim 6, wherein the driving means comprise a linear motor.

8. System according to any one of the preceding claims, wherein the storage means comprise a reel with a motor operably connected to the reel for retrieving cable.

9. System according to claim 8, wherein the support bar extends substantially parallel to the reel axis.

10. System according to claim 1, wherein deflection means for a flexible cover belt are provided on the cable guide.

11. Use of the system for dispensing and retrieving a length of cable according to any one of the preceding claims in a vehicle, in particular in an electric rubber tired gantry crane, wherein the cable is a power cable.

12. Use according to claim 11, wherein the controller is configured to generate signals indicative of the position of the cable guide and its associated support, and said signals are used to control the vehicle operation.

13. A vehicle, namely an electric rubber tired gantry crane comprising a system for dispensing and retrieving a length of cable according to any one of claims 1 to 10 mounted thereon.

14. A method of operating a cable dispensing and retrieving system in a vehicle, wherein a cable dispensed from storage means is released via a cable guide in a cable channel, **characterized in that** the position of the cable guide with respect to the cable channel is monitored, and in case a misalignment is detected the cable guide is moved over an appropriate distance to be brought back in alignment with the cable channel.

15. The method according to claim 14, wherein a pair of sensors arranged at the same level with respect to the channel top edges are used to detect each the distance to a respective channel edge; and
a misalignment signal is generated in case the difference between the distance measured by the first sensor and the distance measured by the second sensor exceeds a predetermined threshold.

16. The method according to claim 15, wherein the misalignment signal is generated in case the predetermined threshold is exceeded during a predetermined time period and/or over a predetermined displacement length of the vehicle.

17. The method according to claim 15 or 16, wherein in case a misalignment signal is generated, the cable guide is moved in the direction of the sensor indicating the greatest distance.

18. The method according to any one of claims 14 to 17, wherein in case the cable guide has been moved over a first predetermined distance with respect to an initial position, an alert signal is generated.

19. The method according to the preceding claim, wherein in case the cable guide has been moved over a second predetermined distance with respect to the initial position and greater than the first predetermined distance, a stop signal is generated.

20. A method of operating a vehicle equipped with a system for dispensing and retrieving a length of cable into/from a cable channel, wherein said system is operated according to the method defined in any one of claims 14 to 19, and wherein said system generates signals indicative of the position of the cable guide and/or of the vehicle's passageway, that are used for operating the vehicle.
